# EUROPÄISCHE PATENTSCHRIFT

(11) **EP 2 994 423 B1**
(45) Veröffentlichungstag und Bekanntmachung des Hinweises auf die Patenterteilung: **03.01.2018**
(21) Anmeldenummer: 14720117.2
(22) Anmeldetag: 28.04.2014
(51) Int. Cl.: C01G 53/00, H01M 4/485, H01M 4/505, H01M 4/525

(54) **SPHÄRISCHE PARTIKEL, IHRE HERSTELLUNG UND VERWENDUNG**
SPHERICAL PARTICLES, THEIR PREPARATION AND USE
PARTICULE SPHÉRIQUE, SA FABRICATION ET SON UTILISATION

(30) Priorität: 08.05.2013 EP 13167000
(43) Veröffentlichungstag der Anmeldung: 16.03.2016
(73) Patentinhaber: BASF SE, 67056 Ludwigshafen am Rhein (DE)
(72) Erfinder: SCHROEDLE, Simon, Iselin 08830 (US); SCHULZ-DOBRICK, Martin, 67056 Ludwigshafen (DE)
(74) Vertreter: BASF IP Association
(86) Internationale Anmeldenummer: PCT/EP2014/058548
(87) Internationale Veröffentlichungsnummer: WO 2014/180686

(56) Entgegenhaltungen:
- WO-A1-2009/074311
- US-A1- 2012 068 108
- HUANG Y ET AL: "A modified Al2O3 coating process to enhance the electrochemical performance of Li(Ni1/3Co1/3Mn1/3)O2 and its comparison with traditional Al2O3 coating process", JOURNAL OF POWER SOURCES, ELSEVIER SA, CH, Bd. 195, Nr. 24, 15. Dezember 2010 (2010-12-15), Seiten 8267-8274, XP027253004, ISSN: 0378-7753 [gefunden am 2010-07-15]

## Beschreibung

Die vorliegende Erfindung betrifft sphärische Partikel, enthaltend
(A) mindestens ein gemischtes Übergangsmetallhydroxid oder gemischtes Übergangsmetallcarbonat von mindestens 3 verschiedenen Übergangsmetallen, gewählt aus Nickel, Kobalt, Mangan, Eisen, Chrom und Vanadium,
(B) mindestens ein Fluorid, Oxid oder Hydroxid von Ba, Al, Zr oder Ti,
wobei die Übergangsmetalle in Übergangsmetallhydroxid (A) bzw. Übergangsmetallcarbonat (A) überwiegend in der Oxidationsstufe +2 vorliegen,
wobei Fluorid (B) bzw. Oxid (B) bzw. Hydroxid (B) zu mindestens 75% in einer äußeren Schale der sphärischen Partikel in Form von Domänen vorliegen und zu mindestens 90% von Übergangsmetallhydroxid (A) bzw. Übergangsmetallcarbonat (A) umhüllt sind.

Energie zu speichern ist schon seit langer Zeit ein Gegenstand wachsenden Interesses. Elektrochemische Zellen, beispielsweise Batterien oder Akkumulatoren, können zur Speicherung von elektrischer Energie dienen. Besonderes Interesse genießen seit neuerer Zeit die sogenannten Lithium-Ionen-Batterien. Sie sind in einigen technischen Aspekten den herkömmlichen Batterien überlegen. So kann man mit ihnen Spannungen erzeugen, die mit Batterien auf der Grundlage von wässrigen Elektrolyten nicht zugänglich sind.

Bei Lithium-Ionen-Batterien spielen die Materialien, aus denen die Elektroden gemacht werden, und dabei insbesondere das Material, aus dem die Kathode gemacht wird, eine wichtige Rolle.

In vielen Fällen verwendet man als aktives Material (auch "Aktivmaterial" genannt) Lithium-haltige Übergangmetallmischoxide, insbesondere Lithium-haltige Nickel-Kobalt-Mangan-Oxide.

Probleme ergeben sich bei vielen Batterien durch mangelnde Zyklenbeständigkeit, die Lebensdauer und die Sicherheit, insbesondere gegen Kurzschlüsse, bei mechanischer Beschädigung der Batterie oder bei übermäßiger thermischer Belastung, die jeweils noch zu verbessern sind.

Um derartige Probleme zu lösen, verwendet man Lithium-haltige Nickel-Kobalt-Mangan-Oxide, die mit einem oder mehreren Metallen dotiert sind, beispielsweise mit Ba, Zr, Al oder Ti, siehe beispielsweise EP 2 238 636. Derartige dotierte Lithium-haltige Übergangmetallmischoxide macht man üblicherweise in einem Mehrstufenverfahren, wobei man zunächst aus einer oder mehreren Lösungen von Übergangsmetallsalzen eine schwerlösliche Verbindung oder eine Mischung von mehreren schwerlöslichen Verbindungen ausfällt, die man jeweils auch als Vorstufe oder auf Englisch als "Precursor" bezeichnet. Diese Vorstufe wird in einer zweiten Stufe thermisch behandelt, meist im Bereich von 600 bis 1000°C. Die Eigenschaften der Vorstufe haben einen starken Einfluss auf die Eigenschaften des aktiven Materials. Die Vorstufe kann man anschließend mit geringen Mengen an Verbindungen von Ba, Ti, Al oder Zr beschichten, so dass man einen auf der äußeren Oberfläche beschichteten Precursor erhält. In einer anderen Variante geht man so vor, dass man die Lösung von Übergangsmetallsalzen mit einer löslichen Verbindung von Ba, Ti, Al oder Zr mischt und die hinzugesetzten Metalle zusammen mit den Übergangsmetallen ausfällt.

Nachteilig ist allerdings, dass durch eine Beschichtung mit den elektrisch vielfach nicht leitfähigen Verbindungen wie Al₂O₃, TiO₂ oder BaO die Strombelastbarkeit der Batterie deutlich abnimmt. Man beobachtet auch, dass beschichtete Kathodenmaterialien in einigen Fällen eine schlechtere Anbindung der Partikel an den Stromableiter erlauben. Nachteilig ist weiterhin, dass Beschichtungen sich durch Alterungserscheinungen vom Rest des Batteriematerials ablösen können.

In WO 2009/074311 ist ein Verfahren zur Herstellung von Vorstufen für Batteriematerialien offenbart, bei dem während der Fällung von gemischtem Nickel-Kobalt-Mangan-Hydroxid kontinuierlich eine Dispersion von Titandioxid zugegeben wird. Nachteilig an dem offenbarten Verfahren ist, dass vielfach Titandioxidteilchen im Batteriematerial zu finden sind, die sich negativ auf die Strombelastbarkeit der Batterie auswirken können.

Es bestand also die Aufgabe, Kathodenmaterialien für Lithium-Ionen-Batterien bereit zu stellen, die einerseits eine verbesserte Sicherheit aufweisen, insbesondere gegen Kurzschlüsse, bei mechanischer Beschädigung der Batterie oder bei übermäßiger thermischer Belastung, ohne jedoch andererseits Nachteile bezüglich der Strombelastbarkeit hinnehmen zu müssen. Weiterhin bestand die Aufgabe, ein Verfahren zur Herstellung von Kathodenmaterialien für Lithium-Ionen-Batterien bereit zu stellen, die einerseits eine verbesserte Sicherheit aufweisen, ohne Nachteile bezüglich der Strombelastbarkeit hinnehmen zu müssen.

Es wurde gefunden, dass die Vorstufe des Kathodenmaterials einen entscheidenden Einfluss auf das Kathodenmaterial hat. Dementsprechend wurden die eingangs definierten Vorstufen gefunden, die in Form von sphärischen Partikeln anfallen und die im Rahmen der vorliegenden Erfindung als erfindungsgemäße sphärische Partikel oder kurz auch als erfindungsgemäße Partikel bezeichnet werden.

Erfindungsgemäße sphärische Partikel enthalten
(A) mindestens ein gemischtes Übergangsmetallhydroxid, im Rahmen der vorliegenden Erfindung kurz auch Übergangsmetallhydroxid (A) genannt, oder mindestens ein gemischtes Übergangsmetallcarbonat, im Rahmen der vorliegenden Erfindung kurz auch Übergangsmetallcarbonat (A) genannt, jeweils von mindestens 3 verschiedenen Übergangsmetallen, gewählt aus Nickel, Kobalt, Mangan, Eisen, Chrom und Vanadium,
(B) mindestens ein Fluorid, Oxid oder Hydroxid von Ba, Al, Zr oder Ti,
wobei die Übergangsmetalle in Übergangsmetallhydroxid (A) bzw. Übergangsmetallcarbonat (A) überwiegend in der Oxidationsstufe +2 vorliegen,
wobei Fluorid (B) bzw. Oxid (B) bzw. Hydroxid (B) zu mindestens 75% in einer äußeren Schale der sphärischen Partikel in Form von Domänen vorliegen und zu mindestens 90% von Übergangsmetallhydroxid (A) bzw. Übergangsmetallcarbonat (A) umhüllt sind.

Erfindungsgemäße Partikel haben eine sphärische Form. Dabei sollen nicht nur solche Partikel als sphärisch mit umfasst sein, die exakt kugelförmig sind, sondern auch solche Partikel, bei denen sich maximaler und minimaler Durchmesser von mindestens 95 % (Zahlenmittel) einer repräsentativen Probe um bis maximal 5% unterscheiden.

Übergangsmetallhydroxid (A) ist ein Hydroxid von mindestens 3 verschiedenen Übergangsmetallen, gewählt aus Nickel, Kobalt, Mangan, Eisen, Chrom und Vanadium, bevorzugt ein gemischtes Hydroxid von Nickel, Mangan und Kobalt. Dabei soll unter "Hydroxid von mindestens 3 verschiedenen Übergangsmetallen" solche Anteile verstanden werden, die nicht nur als Spuren in erfindungsgemäßen Partikeln vorhanden sind, sondern in Anteilen von mindestens 1 Gew.-%, bezogen auf gesamten Übergangsmetallgehalt der betreffenden Partikel, bevorzugt in Anteilen von mindestens 2 Gew.-% und besonders bevorzugt in Anteilen von mindestens 5 Gew.-%.

Übergangsmetallhydroxid (A) kann Spuren von anderen Metallionen aufweisen, beispielsweise Spuren von ubiquitären Metallen wie Natrium, die bei der Beschreibung aber nicht berücksichtigt werden sollen.

Übergangsmetallhydroxid (A) kann neben Hydroxid Gegenionen enthalten, die von Hydroxid verschieden sind, beispielsweise Carbonat, Sulfat, Nitrat, Carboxylat, insbesondere Acetat, oder Halogenid, insbesondere Chlorid. Besonders bevorzugtes Gegenion neben Hydroxid ist Oxid, insbesondere in Kombination mit Sulfat. Dabei können Carbonat, Sulfat, Carboxylat oder Halogenid in Spuren in gemischtem Übergangsmetallhydroxid (A) vorhanden sein, beispielsweise in bis zu 1 Gew.-%, bezogen auf Hydroxid. Oxid kann in größeren Anteilen in gemischtem Übergangsmetallhydroxid (A) vorhanden sein, beispielsweise kann jedes zweite Anion ein Hydroxidion und jedes zweite ein Oxidion sein.

Übergangsmetallcarbonat (A) ist ein Carbonat von mindestens 3 verschiedenen Übergangsmetallen, gewählt aus Nickel, Kobalt, Mangan, Eisen, Chrom und Vanadium, bevorzugt ein gemischtes Carbonat von Nickel, Mangan und Kobalt. Dabei soll unter "Carbonat von mindestens 3 verschiedenen Übergangsmetallen" solche Anteile verstanden werden, die nicht nur als Spuren in erfindungsgemäßen Partikeln vorhanden sind, sondern in Anteilen von mindestens 1 Gew.-%, bezogen auf gesamten Übergangsmetallgehalt der betreffenden Partikel, bevorzugt in Anteilen von mindestens 2 Gew.-% und besonders bevorzugt in Anteilen von mindestens 5 Gew.-%.

Übergangsmetallcarbonat (A) kann Spuren von anderen Metallionen aufweisen, beispielsweise Spuren von ubiquitären Metallen wie Natrium, die bei der Beschreibung aber nicht berücksichtigt werden sollen.

Übergangsmetallcarbonat (A) kann neben Carbonat Gegenionen enthalten, die von Carbonat verschieden sind, beispielsweise Hydroxid, Sulfat, Nitrat, Carboxylat, insbesondere Acetat, oder Halogenid, insbesondere Chlorid. Besonders bevorzugtes Gegenion neben Carbonat sind Oxid und Hydroxid, insbesondere in Kombination mit Sulfat. Dabei können Hydroxid, Sulfat, Carboxylat oder Halogenid in Spuren in gemischtem Übergangsmetallcarbonat (A) vorhanden sein, beispielsweise in bis zu 1 Gew.-%, bezogen auf Carbonat. Oxid kann in größeren Anteilen in gemischtem Übergangsmetallcarbonat (A) vorhanden sein, beispielsweise kann maximal jedes dritte Anion ein Oxidion sein, bevorzugt maximal jedes zehnte.

Übergangsmetallhydroxid (A) bzw. Übergangsmetallcarbonat (A) kann bis zu 20 mol-% Magnesiumhydroxid bzw. Magnesiumcarbonat enthalten, bezogen auf die Kationen. In einer anderen Ausführungsform der vorliegenden Erfindung enthält Übergangsmetallhydroxid (A) bzw. Übergangsmetallcarbonat (A) kein Magnesium.

Erfindungsgemäße Partikel können einen mittleren Durchmesser (D50) im Bereich von 0,1 bis 35 µm aufweisen, bevorzugt 2 bis 30 µm, beispielsweise gemessen durch Lichtstreuung. Geeignete Geräte sind kommerziell erhältlich, beispielsweise Malvern Mastersizer.

Die Breite der Partikeldurchmesserverteilung ist vorzugsweise schmal. In einer Ausführungsform der vorliegenden Erfindung gilt für erfindungsgemäße Partikel (D10) ≥ 3 µm ist und (D90) <30 µm. in einer speziellen Ausführungsform der vorliegenden Erfindung gilt zusätzlich 3 · (D10) ≥ (D50) und (D90) ≤ 2 · (D50). Besonders bevorzugt gilt 2 · (D10) ≥ (D50) und (D90) ≤ 1,5 · (D50).

Die Übergangsmetalle in Übergangsmetallhydroxid (A) bzw. Übergangsmetallcarbonat (A) liegen überwiegend in der Oxidationsstufe +2 vor. Darunter soll verstanden werden, dass mindestens 50 mol-% der Übergangsmetalle in Übergangsmetallhydroxid (A) bzw. Übergangsmetallcarbonat (A), gewählt aus Nickel, Kobalt, Mangan, Eisen, Chrom und Vanadium, in der Oxidationsstufe +2 vorliegen und maximal 50 mol-%, vorzugsweise maximal 40 mol-% in der Oxidationsstufe +3 oder +4 vorliegen können. Die Oxidationsstufe lässt sich beispielsweise durch Redox-Titration ermitteln. In einer speziellen Ausführungsform der vorliegenden Erfindung liegen alle Übergangsmetalle in Übergangsmetallhydroxid (A) bzw. Übergangsmetallcarbonat (A) in der Oxidationsstufe +2 vor, wobei die betreffenden Übergangsmetalle gewählt sind aus Nickel, Kobalt, Mangan.

In einer Ausführungsform der vorliegenden Erfindung liegen sämtliche Übergangsmetalle in Übergangsmetallhydroxid (A) bzw. Übergangsmetallcarbonat (A) in der Oxidationsstufe +2 vor.

In einer Ausführungsform der vorliegenden Erfindung liegen 1 bis 40 mol-% des Mangans in Übergangsmetallhydroxid (A) bzw. Übergangsmetallcarbonat (A) in der Oxidationsstufe +4 und der Rest des Mangans in der Oxidationsstufe +2 vor.

In einer Ausführungsform der vorliegenden Erfindung liegen 1 bis 40 mol-% des Kobalts in Übergangsmetallhydroxid (A) bzw. Übergangsmetallcarbonat (A) in der Oxidationsstufe +3 und der Rest des Kobalts in der Oxidationsstufe +2 vor.

Vorzugsweise liegt Nickel ausschließlich in der Oxidationsstufe +2 vor.

Erfindungsgemäße Partikel enthalten weiterhin (B) mindestens ein Fluorid, Oxid oder Hydroxid von Ba, Al, Zr oder Ti, im Rahmen der vorliegenden Erfindung auch als Fluorid (B), Oxid (B) bzw. Hydroxid (B) bezeichnet. Beispiele für Fluoride (B) sind AlF₃, BaF₂, ZrF₄ und TiF₄. Beispiele für Oxide (B) sind BaO, Al₂O₃, ZrO₂ und TiO₂, weiterhin BaTiO₃ und BaZrO₃. Beispiele für Hydroxide sind solche mit definierter Formel, beispielsweise Ba(OH)₂, aber auch wasserhaltige Oxide wie Al₂O₃·aq, TiO₂·aq und ZrO_{2·}aq und basische Hydroxide wie beispielsweise AIOOH. Bevorzugte Oxide (B) bzw. Hydroxide (B) sind gewählt aus BaTiO₃, Al₂O₃ und TiO₂.

In erfindungsgemäßen Partikeln liegen Fluorid (B) bzw. Oxid (B) bzw. Hydroxid (B) zu mindestens 75%, bevorzugt zu mindestens 90% und besonders bevorzugt vollständig in einer äußeren Schale der sphärischen Partikel in Form von Domänen vor und sind zu mindestens 90% von Übergangsmetallhydroxid (A) bzw. Übergangsmetallcarbonat (A) umhüllt.

Unter Domänen sind solche Bereiche von erfindungsgemäßen Partikeln zu verstehen, in denen der Gehalt an Fluorid (B), Oxid (B) bzw. Hydroxid (B) um mindestens 20 mol-% höher ist als im Rest des betreffenden Partikels. In einer speziellen Ausführungsform der vorliegenden Erfindung liegt in Domänen ausschließlich Fluorid (B), Oxid (B) bzw. Hydroxid (B) vor.

Maximal 25%, bevorzugt bis zu 10% und besonders bevorzugt keine messbaren Anteile von Fluorid (B) bzw. Oxid (B) bzw. Hydroxid (B) sind im Kern von erfindungsgemäßen Partikeln lokalisiert.

Domänen können einen Durchmesser im Bereich von 10 nm bis zu 1 µm aufweisen und sphärische, eiförmige oder irreguläre Form aufweisen. Domänen können einen kristallinen oder einen amorphen Aufbau haben.

Unter "zu mindestens 90% von Übergangsmetallhydroxid (A) bzw. Übergangsmetallcarbonat (A) umhüllt" ist im Zusammenhang mit Domänen zu verstehen, dass mindestens 90% des betreffenden Fluorids (B) bzw. Oxids (B) bzw. Hydroxids (B) von Übergangsmetallhydroxid (A) bzw. Übergangsmetallcarbonat (A) umhüllt sind und maximal 10% des Fluorids (B) bzw. Oxids (B) bzw. Hydroxids (B) auf der äußersten Oberfläche des betreffenden erfindungsgemäßen Partikels liegen.

Kern und äußere Schale von erfindungsgemäßen Partikeln können unterschiedliche Durchmesser aufweisen. Der Durchmesser des Kerns sollte vorzugsweise mindestens 50% des betreffenden erfindungsgemäßen Partikels aufweisen. In einer bevorzugten Ausführungsform der vorliegenden Erfindung weist die äußere Schale eine mittlere Dicke von 1 bis 15% auf, bezogen auf den Durchmesser des jeweiligen Partikels.

Domänen, ihre Zusammensetzung und ihre Dicke lassen sich beispielsweise durch elektronenmikroskopische Untersuchungen bestimmen, beispielsweise durch Rasterelektronenmikroskopie.

In einer Ausführungsform der vorliegenden Erfindung beträgt der Anteil an Fluorid (B) bzw. Oxid (B) bzw. Hydroxid (B) im Bereich von 0,3 bis 5 Gew.-%, bezogen auf Übergangsmetallhydroxid (A) bzw. Übergangsmetallcarbonat (A).

In einer Ausführungsform der vorliegenden Erfindung entspricht gemischtes Übergangsmetallhydroxid (A) der allgemeinen Formel (I)

NiₐCo_{b}Mn_{c}M_{d}Oₑ(OH)_{f} (I)

in der die Variablen wie folgt definiert sind:
M Mg und/oder ein oder mehrere Übergangsmetalle, gewählt aus Fe, Cr und V
a im Bereich von 0,1 bis 0,8, bevorzugt 0,5 bis 0,65,
b im Bereich von 0,07 bis 0,4, bevorzugt 0,15 bis 0,25,
c im Bereich von 0,07 bis 0,6, bevorzugt 0,15 bis 0,25,
d im Bereich von null bis 0,2, bevorzugt bis 0,05,
   wobei gilt: a + b + c + d = 1,
e im Bereich von 0,05 bis 0,5, bevorzugt bis 0,4,
f im Bereich von 0,5 bis 1,9, bevorzugt mindestens 1,2,
und wobei die mittlere Oxidationsstufe von Ni, Co und Mn im Bereich von 2,1 bis 3,2 liegt.

Dabei ist unter der mittleren Oxidationsstufe von Ni, Co und Mn die über sämtliche Übergangsmetale des betreffenden erfindungsgemäßen Partikels gemittelte Oxidationsstufe zu verstehen.

So ist beispielsweise bei e = 0,5 und f = 1.5,die mittlere Oxidationsstufe von Ni, Co und Mn gleich 2,5, und bei e = 0,5 und f = 1,9 ist die mittlere Oxidationsstufe von Ni, Co und Mn gleich 2,9.

In einer Ausführungsform der vorliegenden Erfindung entspricht gemischtes Übergangsmetallcarbonat (A) der allgemeinen Formel (II)

Ni_{a'}Co_{b'}Mn_{c'}M_{d'}O_{e'}(OH)ⱼ(CO₃)ₕ (II)

in der die Variablen wie folgt definiert sind:
M Mg und/oder ein oder mehrere Übergangsmetalle, gewählt aus Fe, Cr und V
a' im Bereich von 0,1 bis 0,5, bevorzugt 0,2 bis 0,3
b' im Bereich von null bis 0,3, bevorzugt null bis 0,15
c' im Bereich von 0,1 bis 0,75, bevorzugt 0,45 bis 0,75
d' im Bereich von null bis 0,2, bevorzugt null bis 0,05
   wobei gilt: a' + b' + c' + d' = 1,
e' im Bereich von null bis 0,6,
h im Bereich von 0,4 bis 1,
j im Bereich von null bis 0,3.

In einer Ausführungsform der vorliegenden Erfindung sind erfindungsgemäße Partikel bezüglich der Übergangsmetalle Nickel, Kobalt, Mangan, Chrom, Vanadium und Eisen einheitlich zusammengesetzt, d.h., über den Querschnitt des betreffenden Partikels ändert sich die relative Zusammensetzung nicht. In einer anderen Ausführungsform der vorliegenden Erfindung sind erfindungsgemäße Partikel einer Probe uneinheitlich zusammengesetzt sind, wobei die mittlere Standardabweichung der Zusammensetzung von Nickel, Kobalt, Mangan, Chrom, Vanadium und Eisen, vorzugsweise die von Nickel, Kobalt und Mangan jeweils bis zu 10 mol-% beträgt. In einer speziellen Ausführungsform sind erfindungsgemäße Partikel uneinheitlich zusammengesetzt, wobei die Partikel aus Primärpartikeln bestehen, die ihrerseits uneinheitlich zusammengesetzt sind, wobei die mittlere Standardabweichung der Zusammensetzung von Nickel, Kobalt, Mangan, Chrom, Vanadium und Eisen, vorzugsweise die von Nickel, Kobalt und Mangan jeweils bis zu 10 mol-% beträgt, die verschiedenen Partikel einer Probe hingegen können im Wesentlichen gleich zusammengesetzt sein.

Ein weiterer Gegenstand der vorliegenden Erfindung ist ein Verfahren zur Herstellung von erfindungsgemäßen Partikeln, im Rahmen der vorliegenden Erfindung auch erfindungsgemäßes Herstellungsverfahren genannt.

In einer Ausführungsform der vorliegenden Erfindung geht man wie folgt vor:
(a) zunächst stellt man Partikel von Übergangsmetallhydroxid (A) bzw. Übergangsmetallcarbonat (A) her,
(b) man bringt Fluorid (B) bzw. Oxid (B) bzw. Hydroxid (B) oder eine Lösung, enthaltend ein Salz von Ba, Al, Zr oder Ti, und gegebenenfalls ein wasserlösliches Fluorid mit Partikeln nach Schritt (a) in Kontakt, und zwar zeitlich oder räumlich getrennt von Schritt (a),
(c) man stellt während Schritt (c) weiteres Übergangsmetallhydroxid (A) bzw. Übergangsmetallcarbonat (A) her und vereinigt das so erhältliche Übergangsmetallhydroxid (A) bzw. Übergangsmetallcarbonat (A) mit den Partikeln aus Schritt (b),
wobei die Schritte (b) und (c) konsekutiv ablaufen.

Dabei kann man in Schritt (b) von Fluorid (B) bzw. Oxid (B) bzw. Hydroxid (B) ausgehen oder man stellt Fluorid (B) bzw. Oxid (B) bzw. Hydroxid (B) in situ her.

Durch das Kontaktieren in Schritt (b) wird Fluorid (B) bzw. Oxid (B) bzw. Hydroxid (B) auf Partikeln nach Schritt (a) aufgebracht.

In den Ausführungsformen, in denen man eine Lösung einsetzt, die ein wasserlösliches Salz von Ba, Al, Zr oder Ti enthält, oder gegebenenfalls ein wasserlösliches Fluorid, wählt man die Art der Lösung so, dass unter den Reaktionsbedingungen von Schritt (b) zumindest anteilig wasserunlösliche Verbindungen ausfällt, die aus Hydroxiden, Oxiden und Fluoriden von Ba, Al, Zr und Ti gewählt werden. Diese wasserunlöslichen Verbindungen scheiden sich unter den Reaktionsbedingungen des Schritts (b) auf Partikeln nach Schritt (a) ab.

Erfindungsgemäße Partikel kann man in diskontinuierlichen oder in kontinuierlichen Verfahrensweisen herstellen. Bevorzugt ist es, erfindungsgemäße Partikel durch Ausfällen aus wässrigen Lösungen herzustellen.

Auch semikontinuierliche Verfahren sind denkbar.

Wünscht man erfindungsgemäße Partikel diskontinuierlich herzustellen, so kann man beispielsweise so vorgehen, dass man in einem Rührgefäß zunächst Übergangsmetallhydroxid (A) bzw. Übergangsmetallcarbonat (A) herstellt, und zwar in Form von Partikeln, die einen geringeren mittleren Durchmesser aufweisen als erfindungsgemäße Partikel, Schritt (a). Die so gebildeten Partikel fallen in der Regel als Suspension an. In die so gebildete Suspension gibt man dann Partikel von Oxid (B), Fluorid B) oder Hydroxid (B), oder man gibt lösliche Verbindungen von Titan, Zirkonium, Barium oder Aluminium zu und gegebenenfalls ein weiteres Fällungsreagenz, beispielsweise ein wasserlösliches Fluorid, Schritt (b). Gleichzeitig oder danach stellt man weiteres Übergangsmetallhydroxid (A) bzw. Übergangsmetallcarbonat (A) her, beispielsweise indem man weiterhin oder erneut Übergangsmetallhydroxid (A) bzw. Übergangsmetallcarbonat (A) ausfällt, Schritt (c).

Speziell ist es möglich, beispielsweise wie folgt vorzugehen. In einem Rührgefäß vereinigt man
wässrige Lösung(en) von Salzen von mindestens 3 verschiedenen Übergangsmetallen, gewählt aus Nickel, Kobalt, Mangan, Eisen, Chrom und Vanadium, beispielsweise als Halogenid, Nitrat, Carboxylat, insbesondere Acetat, oder ganz besonders bevorzugt als Sulfat, mit mindestens einem Fällungsreagenz, beispielsweise mindestens einem Alkalimetallhydroxid oder Alkalimetallcarbonat oder Ammoniumcarbonat, und fällt Übergangsmetallhydroxid (A) bzw. Übergangsmetallcarbonat (A) aus, Schritt (a). Danach gibt man Fluorid (B), Hydroxid (B) oder Oxid (B) in Form von Partikeln oder in Form einer Suspension zu, Schritt (b), und weiterhin wässrige Lösung von Halogeniden, Nitraten, Carboxylaten, insbesondere Acetaten, oder ganz besonders bevorzugt Sulfaten der betreffenden Übergangsmetalle Nickel, Kobalt, Mangan, Eisen, Chrom und/oder Vanadium, und weiteres Fällungsreagenz, Schritt (c).

In einer anderen speziellen Ausführungsform ist es möglich, wie folgt vorzugehen. In einem Rührgefäß vereinigt man wässrige Lösung(en) von Salzen von mindestens 3 verschiedenen Übergangsmetallen, gewählt aus Nickel, Kobalt, Mangan, Eisen, Chrom und Vanadium, beispielsweise als Halogenid, Nitrat, Carboxylat, insbesondere Acetat, oder ganz besonders bevorzugt als Sulfat, mit mindestens einem Fällungsreagenz, beispielsweise mindestens einem Alkalimetallhydroxid oder Alkalimetallcarbonat oder Ammoniumcarbonat, und fällt Übergangsmetallhydroxid (A) bzw. Übergangsmetallcarbonat (A) aus, Schritt (a). Danach gibt man lösliche Verbindung(en) von Titan, Zirkonium, Barium oder Aluminium zu und gegebenenfalls ein wasserlösliches Fluorid, beispielsweise Natriumfluorid oder Ammoniumfluorid, Schritt (b). Anschließend gibt man weitere wässrige Lösung von Salzen von Übergangsmetallen, gewählt aus Nickel, Kobalt, Mangan, Eisen, Chrom und Vanadium, sowie weiteres Fällungsreagenz zu, Schritt (c).

In Ausführungsformen, in denen man eine lösliche Ba-Verbindung einsetzt, um Fluorid (B), Hydroxid (B) oder Oxid (B) zu fällen, wählt man lösliche Salze der Übergangsmetalle nicht aus Sulfaten.

In Ausführungsformen, in denen man Übergangsmetallhydroxid (A) bzw. Übergangsmetallcarbonat (A) herzustellen wünscht, das auch M enthält, das Mg bedeutet, setzt man außerdem mindestens eine Magnesiumverbindung zu, vorzugsweise eine wasserlösliche Magnesiumverbindung, beispielsweise MgSO₄. Die Zugabe von Magnesiumverbindung kann beispielsweise während Schritt (a) oder Schritt (c) erfolgen oder in einem separaten Schritt.

In einer anderen Ausführungsform stellt man erfindungsgemäße Partikel nach einem kontinuierlichen Verfahren her. Dazu kann man speziell so vorgehen, dass man eine Rührkesselkaskade mit mindestens zwei Rührkesseln einsetzt. Im ersten Rührkessel stellt man Übergangsmetallhydroxid (A) bzw. Übergangsmetallcarbonat (A) her, und zwar in Form von Partikeln, die einen geringeren mittleren Durchmesser aufweisen als erfindungsgemäße Partikel, Schritt (a). Die so gebildeten Partikel fallen in der Regel als Suspension an. Diese Suspension überführt man in einen zweiten Rührkessel, in den man Fluorid (B), Hydroxid (B) oder Oxid (B) in Form von Partikeln oder in Form einer Suspension vorlegt oder dosiert, Schritt (b), und weiterhin wässrige Lösung von Halogeniden, Nitraten, Carboxylaten, insbesondere Acetaten, oder ganz besonders bevorzugt Sulfaten der betreffenden Übergangsmetalle Nickel, Kobalt, Mangan, Eisen, Chrom und/oder Vanadium, und weiteres Fällungsreagenz, Schritt (c).

In einer anderen speziellen Ausführungsform ist es möglich, wie folgt vorzugehen. Man setzt eine Rührkesselkaskade mit mindestens zwei Rührkesseln ein. Im ersten Rührkessel stellt man Übergangsmetallhydroxid (A) bzw. Übergangsmetallcarbonat (A) her, und zwar in Form von Partikeln, die einen geringeren mittleren Durchmesser aufweisen als erfindungsgemäße Partikel, Schritt (a). Die so gebildeten Partikel fallen in der Regel als Suspension an. Diese Suspension überführt man in einen zweiten Rührkessel, in den man Fluorid (B), Hydroxid (B) oder Oxid (B) in Form von Partikeln oder in Form einer Suspension vorlegt oder dosiert, Schritt (b). Die so

erhältliche Suspension überführt man in einen dritten Rührkessel, in dem man weitere wässrige Lösung von Halogeniden, Nitraten, Carboxylaten, insbesondere Acetaten, oder ganz besonders bevorzugt Sulfaten der betreffenden Übergangsmetalle Nickel, Kobalt, Mangan, Eisen, Chrom und/oder Vanadium, und weiteres Fällungsreagenz zusetzt, Schritt (c).

In einer anderen speziellen Ausführungsform ist es möglich, wie folgt vorzugehen. Man setzt eine Rührkesselkaskade mit mindestens zwei Rührkesseln ein. Im ersten Rührkessel stellt man Übergangsmetallhydroxid (A) bzw. Übergangsmetallcarbonat (A) her, und zwar in Form von Partikeln, die einen geringeren mittleren Durchmesser aufweisen als erfindungsgemäße Partikel, Schritt (a). Die so gebildeten Partikel fallen in der Regel als Suspension an. Diese Suspension überführt man in einen zweiten Rührkessel, in den man lösliche Verbindung(en) von Titan, Zirkonium, Barium oder Aluminium zusetzt und gegebenenfalls ein wasserlösliches Fluorid, beispielsweise Natriumfluorid oder Ammoniumfluorid, Schritt (b). Die so erhältliche Suspension überführt man in einen dritten Rührkessel, in dem man weitere wässrige Lösung von Halogeniden, Nitraten, Carboxylaten, insbesondere Acetaten, oder ganz besonders bevorzugt Sulfaten der betreffenden Übergangsmetalle Nickel, Kobalt, Mangan, Eisen, Chrom und/oder Vanadium, und weiteres Fällungsreagenz zusetzt, Schritt (c).

In Ausführungsformen, in denen man Übergangsmetallhydroxid (A) bzw. Übergangsmetallcarbonat (A) herzustellen wünscht, das auch M enthält, das Mg bedeutet, setzt man außerdem mindestens eine Magnesiumverbindung zu, vorzugsweise eine wasserlösliche Magnesiumverbindung, beispielsweise MgSO₄. Das Zusetzen von Magnesiumverbindung kann an einem beliebigen Ort der Kaskade erfolgen.

In einer Ausführungsform der vorliegenden Erfindung führt man das erfindungsgemäße Verfahren bei Temperaturen im Bereich von 10 bis 85°C durch, bevorzugt bei Temperaturen im Bereich von 20 bis 50°C.

In einer Ausführungsform der vorliegenden Erfindung führt man das erfindungsgemäße Verfahren bei einem pH-Wert im Bereich von 8 bis 12 durch, bevorzugt sind 10,5 bis 12,0, besonders bevorzugt 11,3 bis 11,9, gemessen jeweils in der Mutterlauge bei 23°C.

In einer Ausführungsform der vorliegenden Erfindung führt man das erfindungsgemäße Verfahren bei einem Druck im Bereich von 500 mbar bis 20 bar durch, bevorzugt ist Normaldruck.

In einer Ausführungsform der vorliegenden Erfindung setzt man einen Überschuss an Fällungsmittel ein, beispielsweise Alkalimetallhydroxid oder Alkalimetallcarbonat, bezogen auf Übergangsmetall. Der molare Überschuss kann beispielsweise im Bereich von 1,1 zu 1 bis 100 zu 1 liegen. Bevorzugt ist es, mit einem stöchiometrischen Anteil an Fällungsmittel zu arbeiten.

In einer Ausführungsform der vorliegenden Erfindung hat wässrige Lösung von Alkalimetallhydroxid eine Konzentration von Alkalimetallhydroxid im Bereich von 1 bis 50 Gew.-%, bevorzugt 10 bis 25 Gew.-%. In einer anderen Ausführungsform der vorliegenden Erfindung hat wässrige Lösung von Alkalimetall(hydrogen)carbonat eine Konzentration von Alkalimetall(hydrogen)carbonat im Bereich von 1 Gew.-% bis maximal zu einer gesättigten Lösung, im Falle von NaHCO₃ bis zu 10 Gew.-%, im Falle von Na₂CO₃ bis zu 21,5 Gew.-%, jeweils bei 20 °C, oder mehr bei entsprechend höherer Temperatur.

In einer Ausführungsform der vorliegenden Erfindung kann man die Konzentrationen von wässriger Lösung von Übergangsmetallsalzen in weiten Bereichen wählen. Bevorzugt wählt man die Konzentrationen so, dass sie im Bereich von insgesamt 1 bis 1,8 mol Übergangsmetall/kg Lösung liegen, besonders bevorzugt sind 1,5 bis 1,7 mol Übergangsmetall/kg Lösung.

In einer Ausführungsform der vorliegenden Erfindung führt man das erfindungsgemäße Verfahren in Gegenwart von mindestens einer Verbindung L durch, die als Ligand für mindestens eins der Übergangsmetalle dienen kann, beispielsweise in Gegenwart von mindestens einem organischen Amin oder insbesondere von Ammoniak. Dabei ist Wasser im Rahmen der vorliegenden Erfindung nicht als Ligand zu betrachten.

In einer Ausführungsform der vorliegenden Erfindung wählt man eine Konzentration von L, insbesondere von Ammoniak im Bereich von 0,05 bis 1 mol/l, bevorzugt 0,1 bis 0,7 mol/l. Besonders bevorzugt sind Ammoniakmengen, bei denen die Löslichkeit von Ni²⁺ in der Mutterlauge maximal 1000 ppm beträgt, besonders bevorzugt maximal 500 ppm beträgt.

In einer Ausführungsform der vorliegenden Erfindung mischt man während der Herstellung von erfindungsgemäßen Partikeln, beispielsweise mit einem Rührer. Vorzugsweise bringt man in die Reaktionsmischung eine Rührleistung von mindestens 1 W/I ein, bevorzugt mindestens 3 W/I und besonders bevorzugt mindestens 5 W/I. In einer Ausführungsform der vorliegenden Erfindung kann man in die Reaktionsmischung eine Rührerleistung von maximal 25 W/I einbringen.

In einer speziellen Ausführungsform der vorliegenden Erfindung kann man so vorgehen, dass man im Falle von diskontinuierlichen Verfahrensvarianten die Rührleistung bei Batchprozesses zum Ende hin absenkt.

In einer Ausführungsform der vorliegenden Erfindung zieht man während der Durchführung des erfindungsgemäßen Verfahrens Mutterlauge ab.

Man kann das erfindungsgemäße Verfahren in Gegenwart oder in Abwesenheit von Reduktionsmitteln durchführen. Beispiele für geeignete Reduktionsmittel sind Hydrazin, Ascorbinsäure, Glucose und Alkalimetallsulfite. Bevorzugt ist es, kein Reduktionsmittel einzusetzen.

Man kann das erfindungsgemäße Verfahren unter Luft, unter Inertgasatmosphäre, beispielsweise unter Edelgas- oder Stickstoffatmosphäre, oder unter reduzierender Atmosphäre durchführen. Als Beispiel für reduzierende Gase sei beispielsweise SO₂ genannt. Bevorzugt arbeitet man unter Inertgasatmosphäre.

Im Anschluss an die eigentliche Herstellung trennt man erfindungsgemäße Partikel von der Mutterlauge ab. Das Abtrennen kann beispielsweise durch Filtrieren, Zentrifugieren, Dekantieren, Sprühtrocknen oder Sedimentieren erfolgen oder durch eine Kombination von zwei oder mehr der vorstehend genannten Operationen. Als Vorrichtungen sind beispielsweise Filterpressen, Bandfilter, Sprühtrockner, Hydrozyklone, Schrägklärapparate oder Kombination der vorstehend genannten Vorrichtungen geeignet.

Als Mutterlauge werden dabei Wasser, wasserlösliche Salze sowie gegebenenfalls weitere, sich in Lösung befindliche Additive bezeichnet. Als wasserlösliche Salze kommen beispielsweise Alkalimetallsalze der Gegenionen von Übergangsmetallen in Frage, beispielsweise Natriumacetat, Kaliumacetat, Natriumsulfat, Kaliumsulfat, Natriumnitrat, Kaliumnitrat, Natriumhalogenid, insbesondere Natriumchlorid, Kaliumhalogenid, weiterhin zusätzliche Salze, gegebenenfalls eingesetzte Additive, sowie gegebenenfalls überschüssiges Alkalimetallcarbonat oder Alkalimetallhydroxid, weiterhin Ligand L. Weiterhin kann die Mutterlauge Spuren von löslichen Übergangsmetallsalzen enthalten.

In einer Ausführungsform der vorliegenden Erfindung kann man über einen Schrägklärapparat, der in zwei Abschnitte eingeteilt ist, Mutterlauge abziehen, in dem man neben ausgefällten Partikeln auch durch das Rühren im Rührgefäß in die Suspension eingebrachte Gasblasen abtrennt.

Im Anschluss an das eigentliche Abtrennen kann man erfindungsgemäße Partikel waschen. Man kann beispielsweise mit reinem Wasser waschen oder mit einer wässrigen Lösung von Alkalimetallcarbonat oder Alkalimetallhydroxid, insbesondere mit einer wässrigen Lösung von Natriumcarbonat, Kaliumcarbonat, Natriumhydroxid, Kaliumhydroxid oder Ammoniak. Wasser und wässrige Lösung von Alkalimetallhydroxid, insbesondere von Natriumhydroxid, sind bevorzugt.

Das Waschen kann beispielsweise unter Anwendung von erhöhtem Druck oder erhöhter Temperatur, beispielsweise 30 bis 50°C, erfolgen. In einer anderen Variante führt man das Waschen bei Zimmertemperatur durch. Die Effizienz des Waschens kann man durch analytische Maßnahmen überprüfen. So kann man beispielsweise den Gehalt an Übergangsmetall(en) im Waschwasser analysieren.

Im Falle, dass man mit Wasser statt mit einer wässrigen Lösung von Alkalimetallhydroxid wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

Im Anschluss an das Abtrennen der erfindungsgemäßen Partikel kann man trocknen. Das Trocknen kann man beispielsweise mit Inertgas durchführen oder mit Luft. Das Trocknen kann man beispielsweise bei einer Temperatur im Bereich von 30 bis 150°C durchführen. Wenn man das Trocknen mit Luft durchführt, so beobachtet man in vielen Fällen, dass einige Übergangsmetalle partiell oxidieren, beispielsweise von Mn²⁺ zu Mn⁴⁺ und Co²⁺ zu Co³⁺, und man beobachtet eine Schwarzfärbung der erfindungsgemäßen Partikel.

Erfindungsgemäße Partikel sind gut geeignet, um sie zu Kathodenmaterialien für Lithium-Ionen-Batterien umzusetzen. Ein weiterer Gegenstand der vorliegenden Erfindung ist daher die Verwendung von erfindungsgemäßen Partikeln zur Herstellung von Lithium-haltigen Übergangsmetallmischoxiden. Ein weiterer Gegenstand der vorliegenden Erfindung ist ein Verfahren zur Herstellung von Lithium-haltigen Übergangsmetallmischoxiden unter Verwendung von erfindungsgemäßen Partikeln, kurz auch erfindungsgemäßer Prozess genannt.

Zur Durchführung des erfindungsgemäßen Prozesses kann man beispielsweise so vorgehen, dass man erfindungsgemäße Partikel mit mindestens einer Lithium-Verbindung mischt und bei Temperaturen im Bereich von 500 bis 1000°C miteinander umsetzt.

Als Lithium-Verbindung kann man vorzugsweise Lithiumsalze wählen, beispielsweise Li₂O, LiOH, LiNO₃, Li₂SO₄, LiCl oder Li₂CO₃, jeweils in wasserfreier Form oder, so existent, als Hydrat, bevorzugt ist LiOH und besonders bevorzugt Li₂CO₃.

Die Mengen an erfindungsgemäßen Partikeln und Lithiumverbindung wählt man dabei so, dass man die gewünschte Stöchiometrie des Kathodenmaterials erhält. Vorzugsweise wählt man erfindungsgemäße Partikel und Lithiumverbindung so, dass das Molverhältnis aus Lithium zur Summe aller Übergangsmetalle und gegebenenfalls M im Bereich von 1 :1 bis 1,4 zu 1 liegt, bevorzugt 1,01 zu 1 bis 1,1 zu 1.

Die Umsetzung bei 500 bis 1000°C kann man in einem Ofen durchführen, beispielsweise in einem Drehrohrofen, in einem Muffelofen, in einem Pendelofen, in einem Rollenherdofen oder in einem Durchschiebeofen. Auch Kombinationen von zweien oder mehreren der vorstehend genannten Öfen sind möglich.

Die Umsetzung bei 500 bis 1000°C kann man über einen Zeitraum von 30 Minuten bis 24 Stunden durchführen. Man kann bei einer Temperatur umsetzen oder ein Temperaturprofil fahren.

Durch die Durchführung des erfindungsgemäßen Prozesses erhält man Lithium-haltige Übergangsmetallmischoxide, die ebenfalls Gegenstand der vorliegenden Erfindung sind.

Ein besonderer Gegenstand der vorliegenden Erfindung sind Lithium-haltige Übergangsmetallmischoxide in partikulärer Form, kurz auch erfindungsgemäße Mischoxide genannt. Erfindungsgemäße Mischoxide enthalten
(C) mindestens ein gemischtes Oxid von Lithium und von mindestens 3 verschiedenen Übergangsmetallen, gewählt aus Nickel, Kobalt, Mangan, Eisen, Chrom und Vanadium, kurz auch Oxid (C) genannt, und
(D) mindestens ein Fluorid oder Oxid von Ba, Al, Zr oder Ti,
wobei Fluorid (D) bzw. Oxid (D) zu mindestens 75% in einer äußeren Schale der Partikel in Form von Domänen vorliegen und zu mindestens 90% von Oxid (C) umhüllt sind.

Erfindungsgemäße Mischoxide liegen in Form von sphärischen Partikeln vor. Dabei sollen-wie auch bei erfindungsgemäßen Partikeln - nicht nur solche Partikel als sphärisch mit umfasst sein, die exakt kugelförmig sind, sondern auch solche Partikel, bei denen sich maximaler und minimaler Durchmesser von mindestens 95 % (Zahlenmittel) einer repräsentativen Probe um bis maximal 5% unterscheiden.

Man beobachtet, dass die Mobilität der Übergangsmetallionen, gewählt aus Ionen von Nickel, Kobalt, Mangan, Eisen, Chrom und Vanadium, innerhalb der Partikel während des erfindungsgemäßen Prozesses je nach Temperatur äußerst gering ist. Hingegen können Ionen von Ba, Al, Zr bzw. Ti während der Durchführung des erfindungsgemäßen Prozesses migrieren bzw. diffundieren. Das zu Schalen, Domänen und Einheitlichkeit der Zusammensetzung im Zusammenhang mit erfindungsgemäßen Partikeln gesagte kann also für erfindungsgemäße Mischoxide entsprechend gelten. Behandelt man hingegen mehr als 12 Stunden bei 950 bis 1000°C, so findet man in der Regel, dass die Ionen von Ba, Al, Zr bzw. Ti gleichmäßig über den Querschnitt der betreffenden Partikel von Mischoxid verteilt sind.

In einer Ausführungsform der vorliegenden Erfindung liegen Partikel von erfindungsgemäßem Mischoxid als Agglomerate von Primärpartikeln vor. Die Primärpartikel können beispielsweise einen mittleren Durchmesser im Bereich von 10 nm bis 500 nm aufweisen.

Partikel von erfindungsgemäßem Mischoxid können einen mittleren Durchmesser (D50) im Bereich von 0,1 bis 35 µm aufweisen, bevorzugt 2 bis 30 µm, beispielsweise gemessen durch Lichtstreuung. Geeignete Geräte sind kommerziell erhältlich, beispielsweise Malvern Mastersizer.

Die Breite der Partikeldurchmesserverteilung ist vorzugsweise schmal. In einer Ausführungsform der vorliegenden Erfindung gilt für Partikel von erfindungsgemäßem Mischoxid (D10) ≥ 3 µm ist und (D90) <30 µm. in einer speziellen Ausführungsform der vorliegenden Erfindung gilt zusätzlich: 3 · (D10) ≥ (D50) und (D90) ≤ 2 · (D50). Besonders bevorzugt gilt 2 · (D10) ≥ (D50) und (D90) ≤ 1,5 · (D50).

Ein weiterer Gegenstand der vorliegenden Erfindung ist die Verwendung von erfindungsgemäßem Mischoxid als oder zur Herstellung von Kathodenmaterial für Lithium-Ionen-Batterien.

Kathodenmaterial kann neben erfindungsgemäßem Mischoxid Kohlenstoff in elektrisch leitfähiger Modifikation enthalten, beispielsweise als Ruß, Graphit, Graphen, Kohlenstoffnanoröhren oder Aktivkohle.

Kathodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et a/. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von erfindungsgemäßem modifiziertem Übergangsmetallmischoxid und elektrisch leitfähigem, kohlenstoffhaltigem Material im Bereich von 200:1 bis 5:1, bevorzugt 100:1 bis 10:1.

Ein weiterer Aspekt der vorliegenden Erfindung ist eine Kathode, enthaltend mindestens ein wie vorstehend hergestelltes Übergangsmetallmischoxid, mindestens ein elektrisch leitfähiges, kohlenstoffhaltiges Material und mindestens ein Bindemittel.

Erfindungsgemäßes Mischoxid und elektrisch leitfähiges, kohlenstoffhaltiges Material sind vorstehend beschrieben.

Ein weiterer Gegenstand der vorliegenden Erfindung sind elektrochemische Zellen, hergestellt unter Verwendung von mindestens einer erfindungsgemäßen Kathode. Ein weiterer Gegenstand der vorliegenden Erfindung sind elektrochemische Zellen, enthaltend mindestens eine erfindungsgemäße Kathode.

In einer Ausführungsform der vorliegenden Erfindung enthält erfindungsgemäß hergestelltes Kathodenmaterial:
im Bereich von 60 bis 98 Gew.-%, bevorzugt 70 bis 96 Gew.-% erfindungsgemäßes Mischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von erfindungsgemäßen Kathoden kann man in weiten Grenzen wählen. Bevorzugt ist es, erfindungsgemäße Kathoden in dünnen Filmen auszugestalten, beispielsweise in Filmen mit einer Dicke im Bereich von 10 µm bis 250 µm, bevorzugt 20 bis 130 µm.

In einer Ausführungsform der vorliegenden Erfindung umfassen erfindungsgemäße Kathoden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemäßen Kathodenmaterialien bzw. erfindungsgemäßen Kathoden in elektrochemischen Zellen. Ein weiterer Gegenstand der vorliegenden Erfindung ist ein Verfahren zur Herstellung von elektrochemischen Zellen unter Verwendung von erfindungsgemäßem Kathodenmaterial bzw. von erfindungsgemäßen Kathoden. Ein weiterer Gegenstand der vorliegenden Erfindung sind elektrochemische Zellen, enthaltend mindestens ein erfindungsgemäßes Kathodenmaterial oder mindestens eine erfindungsgemäße Kathode.

Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Kathode weitere Bestandteile umfassen, beispielsweise Leitsalz, nicht-wässriges Lösungsmittel,

Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (III) und (IV) 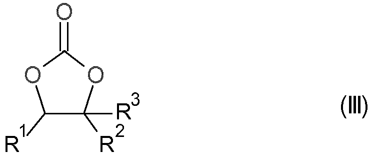 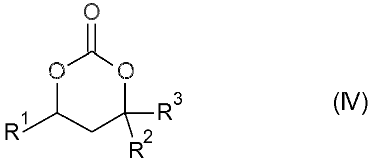 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R² und R³ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (V).

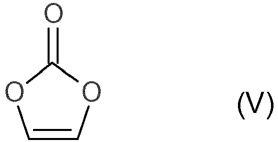

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₜYLi, wobei t wie folgt definiert ist:
t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus LiC(CF₃S₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elekroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine hohe Energiedichte und gute Stabilität aus. Man findet, dass in erfindungsgemäßen elektrochemischen Zellen die Konzentration von HF im Elektrolyten nur gering ist.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemäßen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele weiter erläutert.

Allgemeine Bemerkungen: Unter Litern sind Normliter zu verstehen, wenn nicht anders aufgeführt.
Prozentangaben im Rahmen der vorliegenden Erfindung sind Gew.-%, wenn nicht ausdrücklich anders angegeben.

### I. Herstellungsbeispiele

Angaben in % beziehen sich auf Gewichtsprozent, wenn nicht ausdrücklich anders angegeben.

Die Beispiele und Vergleichsbeispiele wurden in einem Reaktorsystem mit einem Gesamtvolumen von 8 I durchgeführt, wobei das Reaktorsystem einen Rührkessel mit einem Volumen von 7 I aufwies sowie einen Fest/Flüssig-Trennapparat mit einem Volumen von 1 I. Über den Trennapparat konnte man während der Herstellung von erfindungsgemäßen Partikeln über eine Pumpe Mutterlauge aus dem Rührkessel abziehen, ohne gleichzeitig Partikel zu entziehen.

Das Reaktorsystem war ausgestattet mit Schrägblattrührer und Strombrecher. Die Rührleistungsmessung erfolgte über einen elektrischen Motor mit Drehmomentmessung aus Drehzahl und Drehmoment. Weiterhin wies das Reaktorsystem mehrere Dosiereinheiten mit Dosierpumpen auf sowie eine Kathode zur pH-Wert-Messung und einen Temperaturfühler.

### I.1 Herstellung von Übergangsmetallhydroxid ÜH.1

Zuerst wurde das Reaktorsystem mit 8 I Ammoniumsulfatlösung gefüllt (36 g (NH₄)₂SO₄/I) und auf 45°C erwärmt.

Der Inhalt des Rührkessels wurde kontinuierlich durchmischt, wobei eine mechanische Arbeit von ca. 45 Watt am Inhalt geleistet wurde. Der spezifische Leistungseintrag im Rührkessel betrug damit etwa 6,4 Watt pro Liter. Im Trennapparat wurde keine Rührleistung eingebracht.

Weiterhin war im Rührkessel ein Füllstandsensor vorhanden, der die Austragspumpe am flüssigkeitsseitigen Anschluss des Trennapparats so regelte, dass der Stand im Rührkessel im Wesentlichen konstant blieb. Feststoff wurde vom Trennapparat wieder in den Reaktor zurückgeführt.

Der Gasraum im Reaktorsystem, etwa 2 Liter, wurde während der Durchführung der Fällung mit 40 l/h Stickstoff gespült.

Man setzte die folgenden wässrigen Lösungen ein:
Lösung A: 0,825 mol pro kg Lösung Nickelsulfat, 0,33 mol pro kg Lösung Kobaltsulfat, und 0,495 mol pro kg Lösung Mangansulfat, hergestellt durch Auflösen der entsprechenden Hydratkomplexe in Wasser.
Lösung B: 5,59 mol NaOH pro kg Lösung und 1,55 mol NH₃ pro kg Lösung. Hergestellt aus 25%iger NaOH und 25%iger Ammoniaklösung.
Lösung C: 6,25 mol NaOH pro kg Lösung.
Lösung D: 11,8 g Aluminium als Natriumaluminat (technisches Natriumaluminat), gelöst in 1,15 kg Wasser bei ca. 50°C, pH-Wert 14.

Man dosierte Lösungen A und B über Dosierpumpen in den Rührkessel; Lösung C wurde so dosiert, dass der pH Wert im Rührkessel konstant bleibt (pH-Regelung). Lösung D wurde mit einer Schlauchpumpe dosiert. Aus Lösung D bildeten sich bei Einleiten unter Prozessbedingungen feinste Aluminiumhydroxidpartikel.

### Versuchsdurchführung

Nach Erreichen der Reaktionstemperatur (45°C) wurde die Ammoniumsulfatlösung durch Zugabe von Lösung C auf pH 11,82 eingestellt, gemessen bei 23°C. Dann dosierte man über Dosierpumpen die Lösungen A und B bei konstantem Massestrom (957/521 g/h) in die turbulente Zone der Nähe der Rührblätter des Rührkessels des Reaktorsystems zu. Durch eine Regeleinrichtung wurde der pH-Wert mittels Zugabe von Lösung C konstant bei 11,8 (gemessen bei 23°C) gehalten. Es bildete sich eine Suspension. Nach 20,5 Stunden wurde zusätzlich Suspension D dosiert (Zugabe ca. 0,18 l/h). Nach 6 Stunden war Lösung D verbraucht. Danach wurde noch 15 min ohne Zulauf nachgerührt.

Man erhielt eine Suspension von Übergangsmetallhydroxid, das ein molares Verhältnis Ni:Co:Mn von 5:2:3 aufwies. Die Suspension wurde über eine Filternutsche filtriert, der Filterkuchen wurde mit Wasser gewaschen und bei 105°C über einen Zeitraum von 18 Stunden an der Luft getrocknet. Die so erhältlichen erfindungsgemäßen Partikel hatten eine Zusammensetzung von 31,0 Gew.-% Nickel, 12,5 Gew.-% Kobalt und 17,2 Gew.-% Mangan, jeweils in Form der Hydroxide, und lagen in teilweise oxidierter Form vor. Es wurden 3,6 kg erfindungsgemäße Partikel erhalten. Der Aluminiumgehalt wurde atomspektroskopisch ermittelt (ICP-OES) und betrug 0,29 %. Die erfindungsgemäßen Partikel wurden gesiebt (Maschenweite 32 µm; Grobgut: 0,1%) und die Stampfdichte bestimmt (1,97 kg/l). Ein Aliquot wurde in Wasser suspendiert und durch Lichtstreuung die Partikeldurchmesser bestimmt (Malvern Mastersizer 2000). Der mittlere Partikeldurchmesser D50 betrug 10,6 µm, bei schmaler Teilchengrößenverteilung (D10 = 7,8 µm; D90 = 14,5 µm).

Die Dicke der äußeren Schale von erfindungsgemäßen Partikeln war 0,5 bis 0,6 µm und der Kerndurchmesser war ca. 9,6 bis 9,8 µm. In rasterelektronenmikroskopischen Aufnahmen erkannte man Domänen von Aluminiumoxid, die einen Durchmesser im Bereich von ca. 10 bis 100 nm aufwiesen und die ausschließlich in der äußeren Schale waren. Die Domänen von Aluminiumoxid waren vollständig von Nickel-Kobalt-Mangan-Hydroxid umhüllt.

### II.1 Vorschrift zur Herstellung von erfindungsgemäßen sphärischen Partikeln Allgemeine Vorschrift am Beispiel von ÜH.1:

ÜH.1 wurde innig mit gemahlenem Lithiumcarbonat vermischt, wobei das Molverhältnis von Lithium zur Summe der Übergangsmetalle in ÜH.1 1,10 betrug. Eine Teilmenge (40 g) dieses Gemisches wurde in rechtwinkligen Tiegeln aus gesintertem Aluminiumoxid in einem Muffelofen thermisch behandelt (Luftatmosphäre; Maximaltemperatur: 900°C; Heizraten 3 K/min; Haltepunkte bei 300°C und 600°C; Haltezeit bei allen Stufen: je 6 Stunden). Nach Abkühlung auf Raumtemperatur wurde das kalzinierte Gut in einem Mörser verrieben und gesiebt (Maschenweite 32 µm; kein Grobgut). Es wurden etwa 30 g erfindungsgemäße sphärische Partikel SP.1 als praktisch agglomerat-freies Pulver erhalten. Dieses ließ sich zu den erfindungsgemäßen Elektroden verarbeiten.

### II.2 Herstellung von aluminumoxidhaltigem Vergleichsmaterial V-SP.2

In Abwandlung der unter II.1 gegebenen Vorschrift wurde kommerziell erhältliches sphärisches Metallhydroxid (Ni:Co:Mn=5:2:3) und Aluminumhydroxidpulver (2 mol-% Al bezogen auf die Summe der Übergangsmetalle; D50 1,8 µm; 99,4% Al(OH)₃) vermischt. Zur Mischung wurde ein Rollenmischer eingesetzt (80 U/min, 1 Stunde, 30 g Achatkugeln - 10 mm Durchmesser, Ansatzgröße 30 g Pulver). Dann wurde gemahlenes Lithiumcarbonat analog zu II.1 zugesetzt, weitere 5 Stunden gemischt, und ansonsten wie bei II.1 beschrieben verfahren. Es wurden etwa 30 g Vergleichspartikel V-SP.2 erhalten (Aluminiumgehalt vergleichbar zu SP.1).

### II.3 Herstellung von aluminumoxidhaltigem Vergleichsmaterial V-SP.3

Analog wurden unter Verwendung von 5 mol% Aluminiumhydroxid Vergleichspartikel V-SP.3 erhalten.

### III. Allgemeine Vorschrift zur Herstellung von erfindungsgemäßen Elektroden und erfindungsgemäßen elektrochemischen Zellen

Eingesetzte Materialien:
Bindemittel (BM.1): Polymer von Vinylidenfluorid, als Lösung, 10 Gew.-% in NMP. Pulver kommerziell erhältlich als KynarFlex® 2801 der Fa. Arkema, Inc.

Elektrisch leitfähige kohlenstoffhaltige Materialien:
Kohlenstoff 1: Ruß, BET-Oberfläche von ca. 60 m²/g, kommerziell erhältlich als "Super C65" der Firma Timcal
Kohlenstoff 2: Graphit, kommerziell erhältlich als "KS6" der Firma Timcal

Allgemeine Vorschrift am Beispiel von erfindungsgemäßen Partikeln (SP.1):
Man vermischte 0,661 g Kohlenstoff 1, 0,661 g Kohlenstoff 2 und 13,21 g Bindemittel (BM.1) unter Zusatz von 10,02 g N-Methylpyrrolidon (NMP) zu einer Paste. In einem nächsten Schritt wurden 4,99 g dieser Paste mit 4,00 g erfindungsgemäßen Partikeln (SP.1) vermischt. Man beschichtete eine 30 µm dicke Aluminiumfolie mit der vorstehend beschriebenen Paste (Aktivmaterialbeladung ca. 9 mg/cm²). Nach Trocknung bei 105°C wurden kreisförmige Teile der so beschichteten Aluminiumfolie (Durchmesser 19,8 mm) ausgestanzt. Aus den so erhältlichen Elektroden stellte man erfindungsgemäße elektrochemische Zellen EZ.1 her.

Als Elektrolyt wurde eine 1 mol/l Lösung von LiPF₆ in Ethylencarbonat/Dimethylcarbonat (1:1 bezogen auf Massenanteile) eingesetzt. Die Anode bestand aus einer Lithiumfolie, die durch einen Separator aus Glasfaserpapier von der Kathode getrennt war.

Anschließend wurden die Zellen bei Raumtemperatur zusammengesetzt und bei 25°C zyklisiert. Der Zyklisierungsstrom betrug 150 A/kg, bezogen auf das Aktivmaterial der Kathode, wobei in den ersten Zyklen auch die Ratenfestigkeit bei Strömen bis zu 975 A/kg bestimmt wurde. Als Spannungsbereich wurde 3,0 Volt bis 4,3 Volt gewählt.

Die Ladung wurde bei 150 A/kg durchgeführt, bis die obere Abschaltspannung erreicht war, dann wurde noch 30 Minuten bei konstanter Spannung geladen. Die Entladung wurde stets nur so lang durchgeführt, bis die untere Abschaltspannung erreicht war.

Die Kapazitäten der Zyklen 40 und 80 sind in Tabelle 1 angegeben. Ausgehend von diesen Daten wurde der Kapazitätsabfall für 100 Zyklen berechnet, entsprechend dem 2,5-fachen des Abfalls von Zyklus 40 bis Zyklus 80.
Die Herstellung der Vergleichszellen erfolgte analog.
EZ.1: Zelle enthält erfindungsgemäßes Material.
V-EZ.2: Zelle enthält Vergleichsmaterial V-SP.2.
V-EZ.3: Zelle enthält Vergleichsmaterial V-SP.3.

**Tabelle 1: Kapazität und Kapazitätsabfall (Entladung, A·h/kg) von erfindungsgemäßen elektrochemischen Zellen und Vergleichszellen**

| Zyklus | EZ.1 | V-EZ.2 | V-EZ.3 |
|---|---|---|---|
| 40 | 153,6 | 146,1 | 143,7 |
| 80 | 150,2 | 141,7 | 140,3 |
| Kapazitätsabfall | 8,4 | 10,8 | 8,7 |

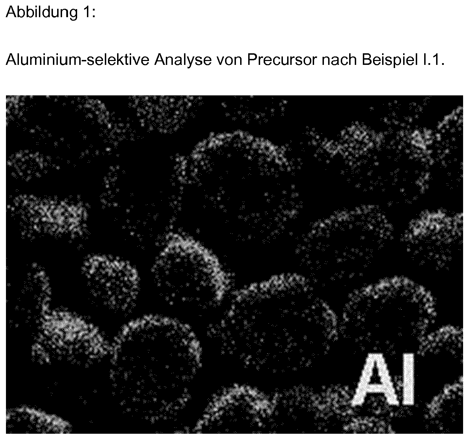

## Patentansprüche

1. Sphärische Partikel, enthaltend
(A) mindestens ein gemischtes Übergangsmetallhydroxid oder gemischtes Übergangsmetallcarbonat von mindestens 3 verschiedenen Übergangsmetallen, gewählt aus Nickel, Kobalt, Mangan, Eisen, Chrom und Vanadium,
(B) mindestens ein Fluorid, Oxid oder Hydroxid von Ba, Al, Zr oder Ti,
wobei die Übergangsmetalle in Übergangsmetallhydroxid (A) bzw. Übergangsmetallcarbonat (A) überwiegend in der Oxidationsstufe +2 vorliegen,
wobei Fluorid (B) bzw. Oxid (B) bzw. Hydroxid (B) zu mindestens 75% in einer äußeren Schale der sphärischen Partikel in Form von Domänen vorliegen und zu mindestens 90% von Übergangsmetallhydroxid (A) bzw. Übergangsmetallcarbonat (A) umhüllt sind.

2. Sphärische Partikel nach Anspruch 1, **dadurch gekennzeichnet, dass** ein oder mehrere Übergangsmetalle in Übergangsmetallhydroxid (A) bzw. Übergangsmetallcarbonat (A) zumindest partiell in der Oxidationsstufe +3 oder +4 vorliegen.

3. Sphärische Partikel nach Anspruch 1 oder 2, **dadurch gekennzeichnet, dass** man Oxid (B) wählt aus BaTiO₃, Al₂O₃ und TiO₂.

4. Sphärische Partikel nach einem der Ansprüche 1 bis 3, **dadurch gekennzeichnet, dass** sie einen mittleren Durchmesser (D50) im Bereich von 2 bis 30 µm aufweisen.

5. Sphärische Partikel nach einem der Ansprüche 1 bis 4, **dadurch gekennzeichnet, dass** die äußere Schale eine mittlere Dicke von 1 bis 15% aufweist, bezogen auf den Durchmesser des jeweiligen Partikels.

6. Sphärische Partikel nach einem der Ansprüche 1 bis 5, **dadurch gekennzeichnet, dass** gemischtes Übergangsmetallhydroxid (A) der allgemeinen Formel (I)
NiₐCO_{b}Mn_{c}M_{d}Oₑ(OH)_{f} (I)
entspricht, in der die Variablen wie folgt definiert sind:
M Mg und/oder ein oder mehrere Übergangsmetalle, gewählt aus Fe, Cr und V
a im Bereich von 0,1 bis 0,8,
b im Bereich von 0,1 bis 0,4,
c im Bereich von 0,1 bis 0,6
d im Bereich von null bis 0,2,
wobei gilt: a + b + c + d = 1,
e im Bereich von 0,05 bis 0,5,
f im Bereich von 0,5 bis 1,9,
und wobei die mittlere Oxidationsstufe von Ni, Co und Mn im Bereich von 2,1 bis 3,2 liegt.

7. Sphärische Partikel nach einem der Ansprüche 1 bis 5, **dadurch gekennzeichnet, dass** gemischtes Übergangsmetallcarbonat (A) der allgemeinen Formel (II)
Ni_{a'}CO_{b'}Mn_{c'}M_{d'}O_{e'}(OH)ⱼ(CO₃)ₕ (II)
entspricht, in der die Variablen wie folgt definiert sind:
M ein und/oder mehrere Übergangsmetalle, gewählt aus Fe, Cr und V
a' im Bereich von 0,1 bis 0,5,
b' im Bereich von null bis 0,3,
c' im Bereich von 0,1 bis 0,75
d' im Bereich von null bis 0,2,
wobei gilt: a' + b' + c' + d' = 1,
e' im Bereich von null bis 0,6,
h im Bereich von 0,4 bis 1,
j im Bereich von null bis 0,3.

8. Sphärische Partikel nach einem der Ansprüche 1 bis 7, **dadurch gekennzeichnet, dass** sie uneinheitlich zusammengesetzt sind, wobei die mittlere Standardabweichung der Zusammensetzung von Nickel, Kobalt und Mangan jeweils bis zu 10 mol-% beträgt.

9. Sphärische Partikel nach mindestens einem der Ansprüche 1 bis 8, **dadurch gekennzeichnet, dass** der Anteil an Fluorid (B) bzw. Oxid (B) bzw. Hydroxid (B) im Bereich von 0,3 bis 5 Gew.-% beträgt, bezogen auf Übergangsmetallhydroxid (A) bzw. Übergangsmetallcarbonat (A).

10. Verfahren zur Herstellung von sphärischen Partikeln nach mindestens einem der Ansprüche 1 bis 9, umfassend die folgenden Schritte:
(a) zunächst stellt man Partikel von Übergangsmetallhydroxid (A) bzw. Übergangsmetallcarbonat (A) her,
(b) man bringt Fluorid (B) bzw. Oxid (B) bzw. Hydroxid (B) oder eine Lösung, enthaltend ein Salz von Ba, Al, Zr oder Ti, und gegebenenfalls ein wasserlösliches Fluorid mit Partikeln nach Schritt (a) in Kontakt, und zwar zeitlich oder räumlich getrennt von Schritt (a),
(c) man stellt während Schritt (c) weiteres Übergangsmetallhydroxid (A) bzw. Übergangsmetallcarbonat (A) her und vereinigt das so erhältliche Übergangsmetallhydroxid (A) bzw. Übergangsmetallcarbonat (A) mit den Partikeln aus Schritt (a),
wobei Schritte (b) und (c) konsekutiv ablaufen.

11. Verwendung von sphärischen Partikeln nach mindestens einem der der Ansprüche 1 bis 9 zur Herstellung von Lithium-haltigen Übergangsmetallmischoxiden.

12. Verfahren zur Herstellung von Lithium-haltigen Übergangsmetallmischoxiden, **dadurch gekennzeichnet, dass** man sphärische Partikel nach mindestens einem der Ansprüche 1 bis 9 mit mindestens einer Lithium-Verbindung mischt und bei Temperaturen im Bereich von 500 bis 1000°C miteinander umsetzt.

13. Lithium-haltige Übergangsmetallmischoxide in partikulärer Form, enthaltend
(C) mindestens ein gemischtes Oxid von Lithium und mindestens 3 verschiedenen Übergangsmetallen, gewählt aus Nickel, Kobalt, Mangan, Eisen, Chrom und Vanadium,
(D) mindestens ein Fluorid oder Oxid von Ba, Al, Zr oder Ti,
wobei Fluorid (D) bzw. Oxid (D) zu mindestens 75% in einer äußeren Schale der Partikel in Form von Domänen vorliegen und zu mindestens 90% von Oxid (C) umhüllt sind.

14. Verwendung von Lithium-haltigen Übergangsmetallmischoxiden nach Anspruch 13 als oder zur Herstellung von Kathodenmaterial für Lithium-Ionen-Batterien.

## Claims

1. Spherical particles comprising
(A) at least one mixed transition metal hydroxide or mixed transition metal carbonate of at least 3 different transition metals selected from nickel, cobalt, manganese, iron, chromium and vanadium,
(B) at least one fluoride, oxide or hydroxide of Ba, Al, Zr or Ti,
where the transition metals in transition metal hydroxide (A) or transition metal carbonate (A) are predominantly in the +2 oxidation state,
where fluoride (B) or oxide (B) or hydroxide (B) is present to an extent of at least 75% in an outer shell of the spherical particles in the form of domains and is encased to an extent of at least 90% by transition metal hydroxide (A) or transition metal carbonate (A).

2. Spherical particles according to claim 1, wherein one or more transition metals in transition metal hydroxide (A) or transition metal carbonate (A) are at least partially present in the +3 or +4 oxidation state.

3. Spherical particles according to claim 1 or 2, wherein oxide (B) is selected from BaTiO₃, Al₂O₃ and TiO₂.

4. Spherical particles according to any of claims 1 to 3, which have a median diameter (D50) in the range from 2 to 30 µm.

5. Spherical particles according to any of claims 1 to 4, wherein the outer shell has a mean thickness of 1 to 15%, based on the diameter of the respective particle.

6. Spherical particles according to any of claims 1 to 5, wherein mixed transition metal hydroxide (A) corresponds to the general formula (I)
NiₐCo_{b}Mn_{c}M_{d}Oₑ(OH)_{f} (I)
in which the variables are each defined as follows:
M is Mg and/or one or more transition metals selected from Fe, Cr and V
a is in the range from 0.1 to 0.8,
b is in the range from 0.1 to 0.4,
c is in the range from 0.1 to 0.6,
d is in the range from zero to 0.2,
where: a + b + c + d = 1,
e is in the range from 0.05 to 0.5,
f is in the range from 0.5 to 1.9,
and the mean oxidation state of Ni, Co and Mn is in the range from 2.1 to 3.2.

7. Spherical particles according to any of claims 1 to 5, wherein mixed transition metal carbonate (A) corresponds to the general formula (II)
Ni_{a'}Co_{b'}Mn_{c'}M_{d'}O_{e'}(OH)ⱼ(CO₃)ₕ (II)
in which the variables are each defined as follows:
Mis one and/or more transition metals selected from Fe, Cr and V,
a' is in the range from 0.1 to 0.5,
b' is in the range from zero to 0.3,
c' is in the range from 0.1 to 0.75,
d' is in the range from zero to 0.2,
where: a' + b' + c' + d' = 1,
e' is in the range from zero to 0.6,
h is in the range from 0.4 to 1,
j is in the range from zero to 0.3.

8. Spherical particles according to any of claims 1 to 7, which are of inhomogeneous composition, the mean standard deviation of the composition of nickel, cobalt and manganese being up to 10 mol% in each case.

9. Spherical particles according to at least one of claims 1 to 8, wherein the proportion of fluoride (B) or oxide (B) or hydroxide (B) is in the range from 0.3 to 5% by weight, based on transition metal hydroxide (A) or transition metal carbonate (A).

10. A process for producing spherical particles according to at least one of claims 1 to 9, comprising the following steps:
(a) first of all, particles of transition metal hydroxide (A) or transition metal carbonate (A) are produced,
(b) fluoride (B) or oxide (B) or hydroxide (B) or a solution comprising a salt of Ba, Al, Zr or Ti and optionally a water-soluble fluoride is contacted with particles according to step (a), at a different time or place from step (a),
(c) further transition metal hydroxide (A) or transition metal carbonate (A) is produced during step (c) and the transition metal hydroxide (A) or transition metal carbonate (A) thus obtainable is combined with the particles from step (a),
where steps (b) and (c) run consecutively.

11. The use of spherical particles according to at least one of claims 1 to 9 for production of lithium-containing mixed transition metal oxides.

12. A process for producing lithium-containing mixed transition metal oxides, which comprises mixing spherical particles according to at least one of claims 1 to 9 with at least one lithium compound and reacting them with one another at temperatures in the range from 500 to 1000°C.

13. A lithium-containing mixed transition metal oxide in particulate form, comprising
(C) at least one mixed oxide of lithium and at least 3 different transition metals selected from nickel, cobalt, manganese, iron, chromium and vanadium,
(D) at least one fluoride or oxide of Ba, Al, Zr or Ti,
where fluoride (D) or oxide (D) is present to an extent of at least 75% in an outer shell of the particles in the form of domains and is encased to an extent of at least 90% by oxide (C).

14. The use of lithium-containing mixed transition metal oxides according to claim 13 as or for production of cathode material for lithium ion batteries.

## Revendications

1. Particules sphériques, contenant :
(A) au moins un hydroxyde de métaux de transition mixte ou un carbonate de métaux de transition mixte d'au moins 3 métaux de transition différents, choisis parmi le nickel, le cobalt, le manganèse, le fer, le chrome et le vanadium,
(B) au moins un fluorure, un oxyde ou un hydroxyde de Ba, Al, Zr ou Ti,
les métaux de transition dans l'hydroxyde de métaux de transition (A) ou le carbonate de métaux de transition (A) se présentant principalement à l'état d'oxydation +2,
le fluorure (B) ou l'oxyde (B) ou l'hydroxyde (B) se présentant à hauteur d'au moins 75 % dans une enveloppe extérieure des particules sphériques sous la forme de domaines, et étant enveloppés à hauteur d'au moins 90 % par l'hydroxyde de métaux de transition (A) ou le carbonate de métaux de transition (A).

2. Particules sphériques selon la revendication 1, **caractérisées en ce qu'**un ou plusieurs métaux de transition dans l'hydroxyde de métaux de transition (A) ou le carbonate de métaux de transition (A) se présentent au moins en partie à l'état d'oxydation +3 ou +4.

3. Particules sphériques selon la revendication 1 ou 2, **caractérisées en ce que** l'oxyde (B) est choisi parmi BaTiO₃, Al₂O₃ et TiO₂.

4. Particules sphériques selon l'une quelconque des revendications 1 à 3, **caractérisées en ce qu'**elles présentent un diamètre moyen (D50) dans la plage allant de 2 à 30 µm.

5. Particules sphériques selon l'une quelconque des revendications 1 à 4, **caractérisées en ce que** l'enveloppe extérieure présente une épaisseur moyenne de 1 à 15 %, par rapport au diamètre de la particule en question.

6. Particules sphériques selon l'une quelconque des revendications 1 à 5, **caractérisées en ce que** l'hydroxyde de métaux de transition mixte (A) correspond à la formule générale (I)
NiₐCo_{b}Mn_{c}M_{d}Oₑ(OH)_{f} (I)
dans laquelle les variables sont définies de la manière suivante :
M Mg et/ou un ou plusieurs métaux de transition, choisis parmi Fe, Cr et V,
a dans la plage allant de 0,1 à 0,8,
b dans la plage allant de 0,1 à 0,4,
c dans la plage allant de 0,1 à 0,6,
d dans la plage allant de zéro à 0,2,
avec : a + b + c + d = 1,
e dans la plage allant de 0,05 à 0,5,
f dans la plage allant de 0,5 à 1,9,
et dans laquelle l'état d'oxydation moyen de Ni, Co et
Mn se situe dans la plage allant de 2,1 à 3,2.

7. Particules sphériques selon l'une quelconque des revendications 1 à 5, **caractérisées en ce que** le carbonate de métaux de transition mixte (A) correspond à la formule générale (II)
Ni_{a'}CO_{b'}Mn_{c'}M_{d'}O_{e'}(OH)ⱼ(CO₃)ₕ (II)
dans laquelle les variables sont définies de la manière suivants :
M un et/ou plusieurs métaux de transition, choisis parmi Fe, Cr et V,
a' dans la plage allant de 0,1 à 0,5,
b' dans la plage allant de zéro à 0,3,
c' dans la plage allant de 0,1 à 0,75,
d' dans la plage allant de zéro à 0,2,
avec : a' + b' + c' + d' = 1,
e' dans la plage allant de zéro à 0,6,
h dans la plage allant de 0,4 à 1,
j dans la plage allant de zéro à 0,3.

8. Particules sphériques selon l'une quelconque des revendications 1 à 7, **caractérisées en ce qu'**elles ont une composition hétérogène, l'écart type moyen de la composition de nickel, cobalt et manganèse étant à chaque fois de jusqu'à 10 % en moles.

9. Particules sphériques selon au moins l'une quelconque des revendications 1 à 8, **caractérisées en ce que** la proportion de fluorure (B) ou d'oxyde (B) ou d'hydroxyde (B) se situe dans la plage allant de 0,3 à 5 % en poids, par rapport à l'hydroxyde de métaux de transition (A) ou au carbonate de métaux de transition (A) .

10. Procédé de fabrication de particules sphériques selon au moins l'une quelconque des revendications 1 à 9, comprenant les étapes suivantes :
(a) tout d'abord, la fabrication de particules d'hydroxyde de métaux de transition (A) ou de carbonate de métaux de transition (A),
(b) la mise en contact d'un fluorure (B) ou d'un oxyde (B) ou d'un hydroxyde (B) ou d'une solution contenant un sel de Ba, Al, Zr ou Ti, et éventuellement un fluorure soluble dans l'eau, avec les particules selon l'étape (a), et ce séparément dans le temps ou dans l'espace de l'étape (a),
(c) la fabrication de davantage d'hydroxyde de métaux de transition (A) ou de carbonate de métaux de transition (A) pendant l'étape (c), et la réunion de l'hydroxyde de métaux de transition (A) ou du carbonate de métaux de transition (A) pouvant ainsi être obtenu avec les particules de l'étape (a),
les étapes (b) et (c) se déroulant consécutivement.

11. Utilisation de particules sphériques selon au moins l'une quelconque des revendications 1 à 9 pour la fabrication d'oxydes mixtes de métaux de transition contenant du lithium.

12. Procédé de fabrication d'oxydes mixtes de métaux de transition contenant du lithium, **caractérisé en ce que** des particules sphériques selon au moins l'une quelconque des revendications 1 à 9 sont mélangées avec au moins un composé de lithium et mises en réaction les unes avec les autres à des températures dans la plage allant de 500 à 1 000 °C.

13. Oxydes mixtes de métaux de transition contenant du lithium sous forme particulaire, contenant :
(C) au moins un oxyde mixte de lithium et d'au moins 3 métaux de transition différents, choisis parmi le nickel, le cobalt, le manganèse, le fer, le chrome et le vanadium,
(D) au moins un fluorure ou un oxyde de Ba, Al, Zr ou Ti,
le fluorure (D) ou l'oxyde (D) se présentant à hauteur d'au moins 75 % dans une enveloppe extérieure des particules sous la forme de domaines, et étant enveloppés à hauteur d'au moins 90 % par l'oxyde (C).

14. Utilisation d'oxydes mixtes de métaux de transition contenant du lithium selon la revendication 13 en tant que ou pour la fabrication d'un matériau de cathode pour batteries lithium-ion.
